# EUROPÄISCHE PATENTSCHRIFT

(11) **EP 2 678 934 B1**
(45) Veröffentlichungstag und Bekanntmachung des Hinweises auf die Patenterteilung: **27.04.2016**
(21) Anmeldenummer: 12714552.2
(22) Anmeldetag: 22.02.2012
(51) Int. Cl.: H02N 2/00

(54) **ULTRASCHALLMOTOR**
ULTRASONIC MOTOR
MOTEUR À ULTRASONS

(30) Priorität: 22.02.2011 DE 102011011992; 06.12.2011 DE 102011087801
(43) Veröffentlichungstag der Anmeldung: 01.01.2014
(73) Patentinhaber: Physik Instrumente (PI) GmbH & Co. KG, 76228 Karlsruhe (DE)
(72) Erfinder: WISCHNEWSKIY, Wladimir, Dr., 14712 Rathenow (DE); WISCHNEWSKIJ, Alexej, 76744 Wörth (DE)
(74) Vertreter: Schatt, Markus F.
(86) Internationale Anmeldenummer: PCT/DE2012/200011
(87) Internationale Veröffentlichungsnummer: WO 2012/113394

(56) Entgegenhaltungen:
- US-A1- 2004 090 146

## Beschreibung

Die vorliegende Erfindung betrifft einen Ultraschallmotor mit einer Vielzahl plattenförmiger piezoelektrischer Ultraschallaktoren mit jeweils wenigstens einem an diesen angeordneten Friktionselement, wobei jeweils einem Ultraschallaktor oder jeweils einem Paar von Ultraschallaktoren ein anzutreibendes Element zugeordnet ist, und der Ultraschallmotor weiterhin ein Gehäuse und eine elektrische Erregervorrichtung aufweist.

Solch ein Ultraschallmotor kann vorzugsweise als Miniaturantrieb in verschiedenen Arten von Präzisionsmechanismen, bei denen eine parallele, unabhängige Vorwärts- oder Drehbewegung mehrerer beweglicher Elemente erforderlich ist, eingesetzt werden. Solche Elemente sind z. B. die Abschirmplatten von Kollimatoren von Röntgengeräten, die Schließelemente von Codeschlössern, die Modulatoren für Laser- oder Lichtquellen, die Antriebe von Objektiven mit mehreren Linsen, die beweglichen Teile chemischer und biologischer Dosierapparaturen oder von Dosiereinrichtungen für Sprühstoffe.

Aus der US 5,714,833 sind Ultraschallmotoren bekannt, in denen plattenförmige Ultraschallaktoren eingesetzt werden, die auf der Basis von akustischen Biege- und Longitudinalwellen arbeiten. In diesen Motoren stellt die Biegewelle eine Zugwelle und die Longitudinalwelle eine Art verzahnte Welle dar. Durch den Einsatz einer Biegewelle als Zugwelle ergibt sich jedoch ein Motor mit nur relativ geringem Wirkungsgrad, und die erreichbare Zugkraft bei gegebener Erregerspannung ist vergleichsweise gering.

Zur Erhöhung der Zugkraft dieser Motoren werden mehrere Ultraschallaktoren in einen Paket zusammengefasst, das dann zum Antrieb eines anzutreibenden Elementes verwendet wird. Da alle Aktoren parallel an das anzutreibende Element angepresst werden, addieren sich die Kräfte, die durch jeden der Aktoren entwickelt werden. Ein solcher Motor hat jedoch entsprechend große Abmessungen. Zudem erschwert die hohe Erregerspannung die Realisierung einer entsprechenden Emegervorrichtung und verteuert diese Motoren, was deren Einsatzgebiet stark eingrenzt.

US 2004/090146 A1 lehrt einen Antrieb mit mehreren plattenförmigen piezoelektrischen Ultraschallaktoren, wobei jedem Aktor ein unabhängig voneinander anzutreibendes Element zugeordnet ist, wobei jeder Aktor von einem elastischen Arm gehalten ist und wobei die elastischen Arme zwischen Gehäuseseitendeckeln mit Abstandshaltern angeordnet sind.

Aus der US 6,765,335 sind weiterhin Ultraschallmotoren mit einem plattenförmigen Ultraschallaktor bekannt, welcher mit zwei akustischen Longitudinalwellen arbeitet.

Durch die Verwendung einer Longitudinalwelle als Zugwelle erhöht sich die Zugkraft der Motoren mit einem Aktor wesentlich. Deshalb besteht bei solchen Motoren in der Regel keine Notwendigkeit zur Verwendung mehrerer Ultraschallaktoren. Ferner arbeiten diese Motoren bei vergleichsweise niedrigen Erregerspannungen.

Der Nachteil bei solchen Ultraschallmotoren, bei denen sich der Ultraschallaktor in einem eigenen Gehäuse befindet, besteht darin, dass es das Motorgehäuse unmöglich macht, mehrere anzutreibende Elemente, die in einer kompakten Einheit zusammen arbeiten, erforderlich nah zueinander anzuordnen. Eine entsprechende Miniaturisierung ist daher nur begrenzt möglich.

Ziel der Erfindung ist es daher, einen kompakten Ultraschallmotor bereitzustellen, welcher es erlaubt, bei kleinsten Abmessungen und hohem Wirkungsgrad eine Vielzahl von anzutreibenden Elementen unter Aufbringung hoher Zugkräfte zu bewegen.

Die zuvor genannte Aufgabe wird gelöst durch einen Ultraschallmotor mit den Merkmalen des Anspruchs 1. Vorteilhafte Ausgestaltungen ergeben sich aus den abhängigen Patentansprüchen.

Im Folgenden werden die Begriffe ,Ultraschallaktor' und ,Aktor' bzw.

'Ultraschallmotor' und 'Motor' synonym verwendet.

Der erfindungsgemäße Ultraschallmotor umfasst eine Vielzahl dünner plattenförmiger piezoelektrischer Ultraschallaktoren, die in sehr geringem Abstand zueinander angeordnet sind. Jeweils getrennt voneinander sind die einzelnen Ultraschallaktoren durch ebenfalls dünne Halter, welche die Ultraschallaktoren derart fixieren, dass diese sich geringfügig in Richtung des bzw. der angetriebenen Elemente bewegen können. Hierbei ist jedem Ultraschallaktor bzw. jedem Paar von Ultraschallaktoren ein anzutreibendes Element zugeordnet, so dass eine unabhängige Bewegung der anzutreibenden Elemente möglich ist. Die Ultraschallaktoren bzw. die an diesen angeordneten Friktionselemente werden in ihrer Gesamtheit durch eine elastische Zwischenlage gegen Friktionsschichten der anzutreibenden Elemente gedrückt, während die einzelnen Aktoren und die zwischen ihnen angeordneten Halter durch zwei Seitendeckel gegeneinander verpresst sind. Insgesamt ergibt sich somit eine sehr kompakte Kassette von Ultraschallaktoren und dadurch ein äußerst kompakter Ultraschallmotor, mit dem sich eine Vielzahl von anzutreibenden Elementen unabhängig voneinander und effektiv bewegen lässt.

Es kann sich als zweckmäßig erweisen, dass der Halter schalldämpfende Öffnungen oder Nuten aufweist.

Zudem kann es sich als zweckmäßig erweisen, dass die Ultraschallaktoren an ihnen angeordnete Elektroden aufweisen, und Anschlüsse der Elektroden als plattenförmige Metallkontakte oder als Elemente aus leitfähigem Kunststoff oder aus leitfähigem Gummi ausgeführt sind.

Weiterhin kann es sich als zweckmäßig erweisen, dass die elastische Zwischenlage Gummi oder Kunststoff aufweist und vorzugsweise aus diesen Materialien besteht.

Außerdem kann es sich als zweckmäßig erweisen, dass die elastische Zwischenlage elektrisch leitfähige Zonen besitzt, die in Kontakt mit den Elektroden der Ultraschallaktoren stehen.

Es kann vorteilhaft sein, dass die anzutreibenden Elemente eine platten- oder scheibenförmige Geometrie aufweisen.

Ebenso kann es vorteilhaft sein, dass die anzutreibenden Elemente eine Drei- oder Mehrschichtstruktur aufweisen.

Hierbei kann es vorteilhaft sein, dass wenigstens eine Schicht eines anzutreibenden Elements Oxidkeramik, Metall, Keramik niedriger Güte, poröse Keramik, poröses Metall oder Kunststoff aufweist.

Darüber hinaus kann es vorteilhaft sein, dass wenigstens eine Schicht eines anzutreibenden Elements schalldämpfende Öffnungen oder Nuten aufweist.

Es kann sich als günstig erweisen, dass die anzutreibenden Elemente teilweise oder vollständig aus Metall mit einer hohen Atomzahl, wie z. B. Tantal, Wolfram, Gold, Blei oder einem anderen ähnlichen Material, welches Röntgen- oder Neutronenstrahlung aufnimmt, bestehen.

Zudem kann es sich als günstig erweisen, dass die Erregervorrichtung Leistungsverstärker enthält, deren Anzahl der Anzahl der Ultraschallaktoren oder der Anzahl der Ultraschallaktorenpaare entspricht, und welche die Ultraschallaktoren erregen, wobei alle Anschlüsse dieser Leistungsverstärker mit einem Steuergenerator verbunden sind, dessen Frequenz des Ausgangsignals konstant und gleich der Arbeitsfrequenz eines der Ultraschallaktoren ist.

Es kann sich ebenso als günstig erweisen, dass die Erregervorrichtung Leistungsverstärker enthält, deren Anzahl der Anzahl der Ultraschallaktoren oder der Anzahl der Ultraschallaktorenpaare entspricht, und welche die Ultraschallaktoren erregen, wobei alle Anschlüsse dieser Leistungsverstärker mit einem Steuergenerator verbunden sind, der eine Vorrichtung zur Frequenzregulierung des Steuersignals enthält, die diese Frequenz in Abhängigkeit von der Änderung auf die Arbeitsfrequenz eines der Ultraschallaktoren einstellt.

Es kann von Vorteil sein, dass die Erregervorrichtung Leistungsverstärker enthält, deren Anzahl der Anzahl der Ultraschallaktoren oder der Anzahl der Ultraschallaktorenpaare entspricht, und welche die Ultraschallaktoren erregen, wobei der Eingang jedes Leistungsverstärkers mit dem Ausgang eines Steuergenerators verbunden ist, der eine Vorrichtung zur Frequenzregulierung des Steuersignals enthält, die diese Frequenz in Abhängigkeit von der Änderung der Arbeitsfrequenz des durch den entsprechenden Leistungsverstärker angeregten Ultraschallaktors einstellt.

Weiterhin kann es von Vorteil sein, dass jedes anzutreibende Element mit einem Geber für die Lage und/oder für die Bewegungsgeschwindigkeit ausgestattet ist, der mit einem Controller für die Lage oder Bewegungsgeschwindigkeit dieses anzutreibenden Elements verbunden ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
Fig. 1 einen erfindungsgemäßen Ultraschallmotor
Fig. 2 einen erfindungsgemäßen Ultraschallmotor nach Fig. 1 in Explosionsdarstellung
Fig. 3 und 4 in den Darstellungen 11, 12, 19, 20, 22, 23, 24 und 25 unterschiedliche Ausführungsformen eines Ultraschallaktors eines erfindungsgemäßen Ultraschallmotors
Fig. 5 in den Darstellungen 28-30 unterschiedliche Ausführungsformen des Halters eines erfindungsgemäßen Ultraschallmotors
Fig. 6 in den Darstellungen 33-36 unterschiedliche Ausführungsformen des Halters eines erfindungsgemäßen Ultraschallmotors mit dämpfenden Öffnungen
Fig. 7 in den Darstellungen 38 und 39 einen Halter eines erfindungsgemäßen Ultraschallmotors mit unterschiedlichen Ausführungsformen der Anschläge
Fig. 8 einen Halter eines erfindungsgemäßen Ultraschallmotors mit beidseitig angeordneten Anschlägen
Fig. 9: Aufbauprinzip eines erfindungsgemäßen Ultraschallmotors mit Ultraschallaktoren, die jeweils ein Friktionselement aufweisen
Fig. 10 das Aufbauprinzip eines erfindungsgemäßen Ultraschallmotors mit Ultraschallaktoren, die jeweils zwei Friktionselemente aufweisen
Fig. 11 das Aufbauprinzip eines erfindungsgemäßen Ultraschallmotors mit Haltern, die beidseitig Anschläge aufweisen
Fig. 12 in den Darstellungen 41-46 unterschiedliche Ausführungsformen eines länglichen anzutreibenden Elements eines erfindungsgemäßen Ultraschallmotors
Fig. 13 in den Darstellungen 47 und 48 unterschiedliche Ausführungsformen eines ring- oder scheibenförmigen anzutreibenden Elements eines erfindungsgemäßen Ultraschallmotors
Fig. 14 in den Darstellungen 57 und 58 Ultraschallaktoren eines erfindungsgemäßen Ultraschallmotors mit Kontaktflächen
Fig. 15 das Aufbauprinzip eines erfindungsgemäßen Ultraschallmotors mit einer elektrisch leitfähige Zonen aufweisenden elastischen Zwischenlage
Fig. 16 das Aufbauprinzip eines erfindungsgemäßen Ultraschallmotors mit scheibenförmigen anzutreibenden Elementen
Fig. 17-20 Blockschaltbilder zu unterschiedlichen Ausführungsformen der Erregervorrichtung eines erfindungsgemäßen Ultraschallmotors

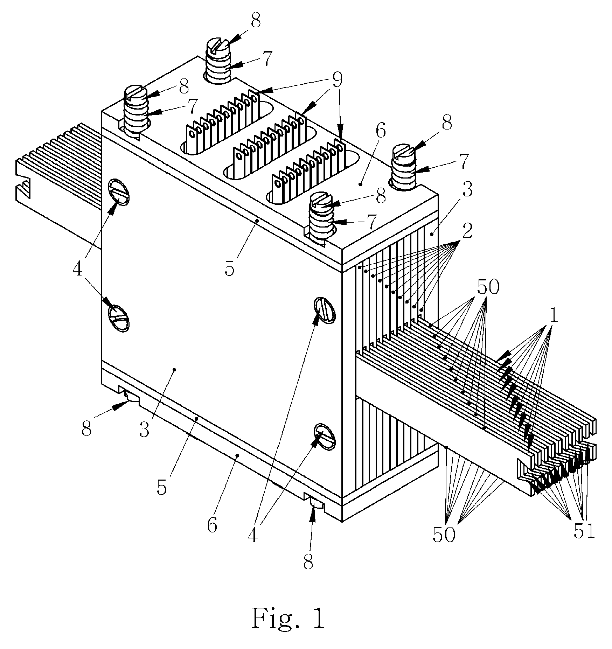

Fig. 1 zeigt einen erfindungsgemäßen Ultraschallmotor in zusammengebautem bzw. montiertem Zustand. Insgesamt zehn Halter 2 haltern jeweils ein gegenüberliegend angeordnetes Aktorenpaar (in Fig. 1 nicht dargestellt). Die Aktoren jedes Aktorenpaars werden mittels der elastischen Zwischenlagen 5 gegen das jeweils zugeordnete anzutreibende Elemente 1 gedrückt, wobei gegen die elastische Zwischenlagen 5 ihrerseits Gehäusestirndeckel 6 drücken. Diese sind mittels Anpressfedern 7 und Anpressbolzen 8 an den Gehäuseseitendeckeln 3 befestigt.

Die elastischen Zwischenlagen 5 bestehen aus einem gummiartigen Material mit sehr geringem Elastizitätsmodul, so dass gewährleistet ist, dass die elastischen Zwischenlagen nur eine geringfügige Dämpfung der Aktorschwingungen bewirken. Es ist daneben denkbar, elastische Zwischenlagen aus einem sehr weichen Kunststoff zu verwenden.

Durch Öffnungen der Gehäusestirndeckels 6 ragen die Anschlüsse 9, die mit den Elektroden der Aktoren verbunden sind, um an diesen eine elektrische Erregerspannung anlegen zu können. Seitlich gegeneinander verpresst sind die Halter 2 mittels der Gehäuseseitendeckel 3, die über Zugbolzen 4 miteinander verbunden sind und die Halter 2 zwischen ihnen aneinanderdrücken, so dass ein Paket 27 an Aktoren entsteht.

Die piezoelektrischen Platten 13 jedes Aktors 10 haben folgende Abmessungen: Länge L = 50 mm, Höhe H = 23 mm und Dicke t = 1,0 mm. Die Platten 13 bestehen aus Piezokeramik der Marke PIC 181 der Firma PI Ceramic GmbH, D-07589 Lederhose. Die in Fig. 1 nicht dargestellten Friktionselemente 18 sind als rechteckige Platten ausgeführt und bestehen aus Oxidkeramik vom Typ Sialon. Die anzutreibenden Elemente 1 sind als Platten mit der Länge 100 mm, der Höhe 10 mm und der Dicke 1,0 m ausgeführt.

Bei einer Amplitude der sinusförmigen Erregerspannung von 20 V und einer Arbeitsfrequenz von fₐ= 82,5 kHz entwickelt das anzutreibende Element 1 des Motors eine maximale Zugkraft von 20 N.

In der in Fig. 1 dargestellten konstruktiven Auslegung, bei welcher der Motor zehn anzutreibende Elemente 1 aufweist, beträgt der Abstand zwischen den zwei äußeren anzutreibenden Elementen 20 mm.

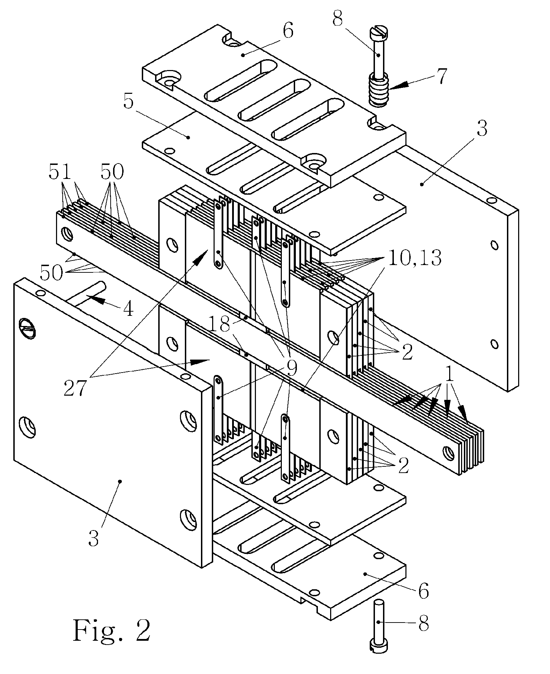

Fig. 2 zeigt den erfindungsgemäßen Ultraschallmotor gemäß Fig. in Explosionsdarstellung. Die Aktoren 10 mit dem jeweils an diesen angeordneten Friktionselement 18 sind in den Haltern 2 derart eingespannt, dass sie sich geringfügig in Richtung zum jeweiligen anzutreibenden Element 1 bewegen lassen. Die Friktionselemente 18 sind in Kontakt mit den Friktionsschichten 50 der anzutreibenden Elemente 1.

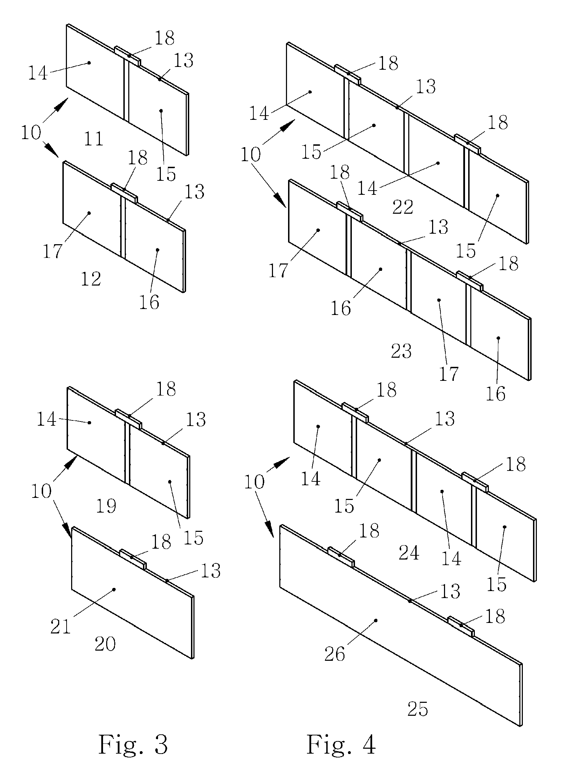

Fig. 3 zeigt in den Darstellungen 11 und 12 Vorder- und Rückansicht eines Ultraschallaktors eines erfindungsgemäßen Ultraschallmotors. Gemäß Darstellung 11 ist dieser in Form einer dünnen, rechteckigen piezoelektrischen Platte 13 ausgeführt, wobei auf einer Seite die Erregerelektroden 14 und 15, und auf der gegenüberliegenden Seite die beiden allgemeinen Elektroden 16 und 17 angeordnet sind. Der Ultraschallaktor weist zudem ein Friktionselement 18 auf, das an einer seiner langen Randflächen angeordnet ist.

In den Darstellungen 19 und 20 von Fig. 3 ist die Vorder- und Rückansicht einer weiteren Ausführungsform eines Ultraschallaktors eines erfindungsgemäßen Ultraschallmotors gezeigt. Hierbei weist der Ultraschallaktor 10 in Form einer dünnen, rechteckigen und piezoelektrischen Platte 13 auf seiner Vorderseite die beiden Erregerelektroden 14 und 15 auf, während er auf seiner Rückseite eine allgemeine Elektrode 21 aufweist. Wiederum besitzt der Ultraschallaktor gemäß den Darstellungen 19 und 20 ein Friktionselement 18, das an einer seiner langen Randflächen angeordnet ist.

Die Darstellungen 22 und 23 von Fig. 4 zeigen eine weitere Ausführungsform eines Ultraschallaktors eines erfindungsgemäßen Ultraschallmotors in Vorder- und Rückansicht. Hierbei weist der Ultraschallaktor 10 in Form einer dünnen, rechteckigen und piezoelektrischen Platte 13 zwei Paare von Anregungselektroden 14, 15 auf seiner Vorderseite und zwei Paare von allgemeinen Elektroden 16, 17 auf seiner Rückseite auf. An einer der langen Seitenflächen des Ultraschallaktors 10 sind zwei voneinander beabstandete Friktionselemente 18 angeordnet.

Gemäß den Darstellungen 24 und 25 von Fig. 4 ist es im Unterschied zum Ultraschallaktor gemäß den Darstellungen 22 und 23 möglich, die beiden Paare von allgemeinen Elektroden auf der Rückseite durch eine einzige allgemeine Elektrode 26 zu ersetzen.

Die Ultraschallaktoren 10 gemäß den Darstellungen 11, 12, 19, 20 und 22 bis 25 sind senkrecht zu den Erregerelektroden und den allgemeinen Elektroden bzw. der allgemeinen Elektrode polarisiert. Dies schließt auch die Fälle ein, bei denen es in unterschiedlichen Bereichen des Ultraschallaktors unterschiedliche, d.h. antiparallele Polarisationsrichtungen gibt.

Die in Fig. 3 dargestellten Aktoren 10 arbeiten nach dem Prinzip, dass in ihnen mit Hilfe der elektrischen Spannung der Frequenz fₐ eine erste (λ/2) Mode einer akustischen Longitudinalstehwelle, bezogen auf die Höhe H des Aktors, und eine zweite (λ) Mode einer akustischen Longitudinalstehwelle, bezogen zur Länge L des Aktors, erregt wird.

Im Vergleich hierzu arbeiten die in Fig. 4 dargestellten Aktoren 10 derart, dass in ihnen mit Hilfe der elektrischen Spannung der Frequenz fₐ eine erste (λ/2) Mode einer akustischen Longitudinalstehwelle, bezogen auf die Höhe H des Aktors, und der vierten (2λ) Mode einer akustischen Longitudinalstehwelle, bezogen zur Länge L des Aktors, erregt wird.

Hierbei stellen die Länge L und die Höhe H Resonanzabmessungen für die im Aktor 10 erregten akustischen Wellen dar, während die Dickte t der Aktoren 10 keine Resonanzgröße für die erregten akustischen Wellen darstellt und kleiner H/10 gewählt ist.

Die Friktionselemente 18 können die Form eines rechteckigen Prismas oder eine pyramidale Form haben, und sie können weiterhin zylindrische oder polyzylindrische Elemente bzw. Halbkugeln oder ähnliche geometrische Elemente bzw. Abschnitte aufweisen. Sie sind aus harten Oxidkeramiken auf Basis von Al₂O₃, ZrO₂, SiC, Si₃N₄, oder aus Metallkeramik auf der Basis von WC, Al₂TiO₅, oder aus einem anderen, ähnlich abriebfesten Werkstoff gefertigt.

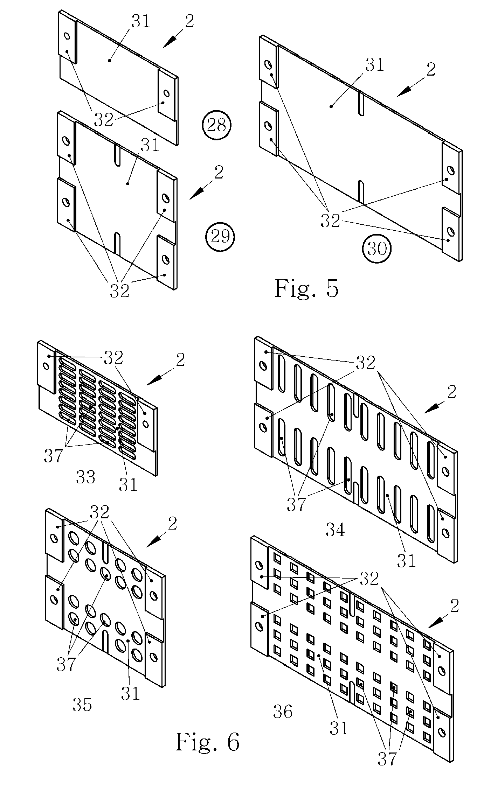

Fig. 5 zeigt in den Darstellungen 28 bis 30 verschiedene Ausführungsformen für den Halter 2 eines erfindungsgemäßen Ultraschallmotors. Darstellung 28 von Fig. 5 zeigt hierbei einen Halter 2 zur Fixierung eines Aktors 10, der ein Friktionselement aufweist, während Darstellung 29 von Fig. 5 einen Halter 2 zeigt, der zur Fixierung von zwei gegenüberliegenden Aktoren mit jeweils einem Friktionselement dient. Darstellung 30 von Fig. 5 zeigt einen Halter für zwei gegenüberliegende Aktoren mit jeweils zwei Friktionselementen. Jeder der in den Darstellungen 28 bis 30 gezeigten Halter 2 hat eine dünne Seitenwand 31 und weist darüber hinaus Anschläge 32 auf, wobei die Seitenwand 31 die Querverschiebung des durch ihn gehalterten Aktors verhindert, während die Anschläge 32 die Längsverschiebung des jeweiligen Aktors verhindern. Die Seitenwand hat die zusätzliche Aufgabe, die gegenseitige Beeinflussung durch die jeweils erzeugten Ultraschallschwingungen benachbarter Ultraschallaktoren zu minimieren und diesbezüglich voneinander zu isolieren.

In den Darstellungen 33 bis 36 von Fig. 6 sind weitere Ausführungsformen des Halters 2 gezeigt, bei welchen dieser schalldämpfende Öffnungen 37 in der Seitenwand 31 aufweist. Im Folgenden werden die Begriffe schalldämpfende Öffnungen' und ,dämpfende Öffnungen' synonym verwendet. Besagte Öffnungen dienen zur Dämpfung parasitärer akustischer Wellen, die sich in dem Halter 2 ausbreiten. Diese Öffnungen haben beim Halter gemäß Darstellung 33 die Form von Langlöchern, die sich in Längsrichtung des Halters erstrecken. Die dämpfenden Öffnungen des Halters 2 gemäß Darstellung 34 von Fig. 6 haben ebenfalls die Form von Langlöchern, welche sich jedoch quer zur Längsrichtung des Halters erstrecken. Gemäß Darstellung 35 von Fig. 6 besitzen die dämpfenden Öffnungen 37 des Halters 2 eine kreisrunde Form, und in Darstellung 36 von Fig. 6 sind die dämpfenden Öffnungen quadratisch geformt.

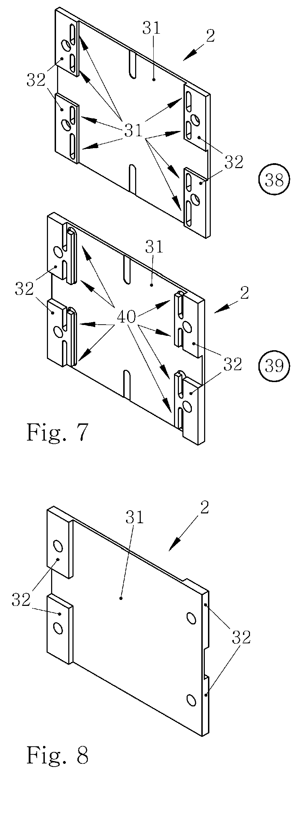

In den Darstellungen 38 und 39 von Fig. 7 sind weitere Ausführungsformen der Anschläge 32 des Halters 2 gezeigt. Dabei sind die Anschläge 32 derart gestaltet, dass sie eine spezifische Elastizität aufweisen und die Schwingungen der über sie gehalterten Ultraschallaktoren aufnehmen und ebenfalls zu Schwingungen bzw. Resonanzschwingungen angeregt werden, wodurch die mechanischen Verluste in Haltern 2 verringerbar sind.

Gemäß Fig. 8 ist es ebenso möglich, dass die Anschläge 32 beidseitig der Seitenwand 31 angeordnet sind, wodurch Zwischenräume zwischen den Aktoren und den Anschlägen im zusammengebauten Zustand eines entsprechenden Ultraschallmotors verhindert werden können.

Die Halter 2 gemäß den Fig. 6 bis 8 bestehen aus einem hochtemperaturbeständigen Kunststoff. Sie können jedoch alternativ einen metallischen Grundkörper besitzen, der mit einer dünnen Schicht eines hochtemperaturbeständigen Kunststoffs versehen ist.

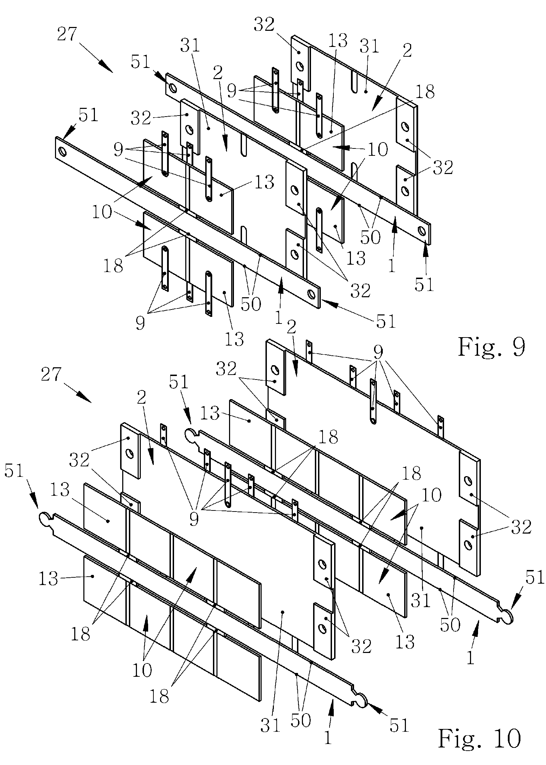

Fig. 9 verdeutlicht das Aufbauprinzip einer Ausführungsform des erfindungsgemäßen Ultraschallmotors, wobei jeweils zwei gegenüberliegende Ultraschallaktoren 10 ein diesen zugeordnetes anzutreibendes Element 1 bewegen, und jeder Ultraschallaktor ein Friktionselement 18 aufweist.

Fig. 10 verdeutlicht das Aufbauprinzip einer weiteren Ausführungsform des erfindungsgemäßen Ultraschallmotors. Der wesentliche Unterschied zu Fig. 9 besteht darin, dass die Ultraschallaktoren jeweils zwei Friktionselemente 18 aufweisen.

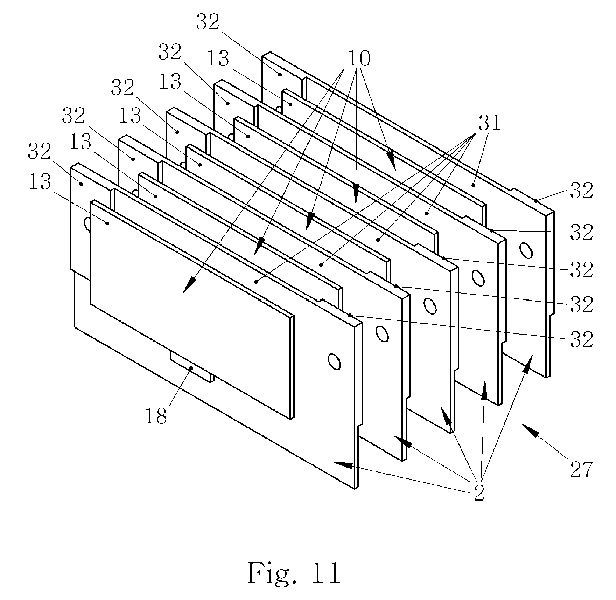

Fig. 11 verdeutlich das Aufbauprinzip einer Ausführungsform des erfindungsgemäßen Ultraschallmotors, bei welchem Halter 2 zur Anwendung kommen, die beidseitig der Seitenfläche 31 Anschläge 32 aufweisen. Damit kann ein besonders kompakter Aufbau des Ultraschallmotors erfolgen.

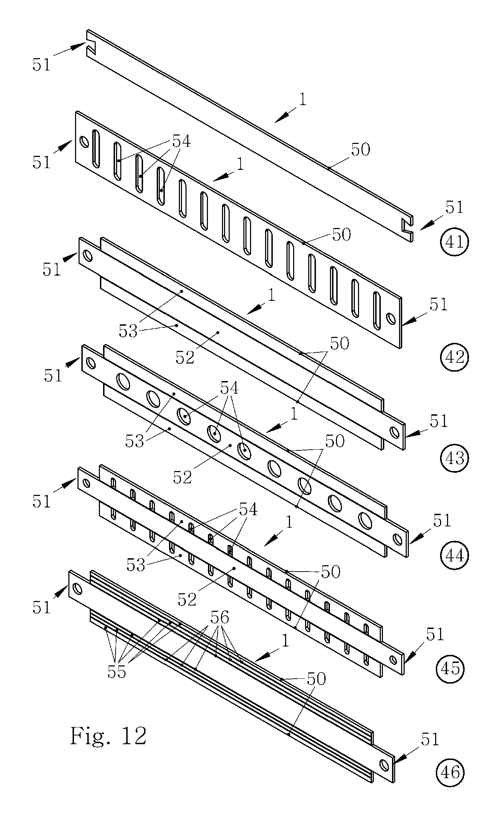

Fig. 12 zeigt in den Darstellungen 41 bis 46 unterschiedliche Ausführungsformen des anzutreibenden Elements 1. Gemäß Darstellung 41 ist das anzutreibende Element monolithisch aufgebaut und besitzt eine langgestreckte rechteckige Form. An seinen langen Seitenflächen sind Friktionsschichten 50 angeordnet. An den Enden des anzutreibenden Elements befinden sich Verbindungsabschnitte 51 zum Verbinden der anzutreibenden Elemente mit einer mechanischen Last.

Auch das anzutreibende Element 1 gemäß Darstellung 42 von Fig. 12 ist monolithisch aufgebaut und besitzt eine langgestreckte, rechteckige Form mit Friktionsflächen auf den langen Seitenflächen. Weiterhin weist das anzutreibende Element dämpfende Öffnungen 54 auf, welche die Form eines Langloches besitzen und senkrecht zur Längserstreckung des anzutreibenden Elements ausgerichtet sind.

Gemäß Darstellung 43 von Fig. 12 ist das anzutreibende Element 1 mehrteilig aufgebaut und besitzt einen Träger 52 und zwei Seitenteile 53. Die Verwendung nur eines Seitenteils ist ebenso denkbar. Der Träger 52 besteht aus Stahl, jedoch sind andere Metalle ebenfalls möglich. Die Seitenteile hingegen bestehen aus Metallkeramik und besitzen auf ihren langen Seitenflächen eine Friktionsschicht 50.

Das anzutreibende Element 1 gemäß Darstellung 44 von Fig. 12 unterscheidet sich von demjenigen gemäß Darstellung 43 von Fig. 12 lediglich dadurch, dass der Träger 52 dämpfende Öffnungen 54 aufweist.

Beim anzutreibenden Element 1 gemäß Darstellung 45 von Fig. 12 weisen die beiden Seitenteile 53 dämpfende Öffnungen 54 auf, während beim anzutreibenden Element gemäß Darstellung 46 von Fig. 12 die beiden Seitenteile eine Vielschichtstruktur aus harten Schichten 55 und weichen Schichten 56 aufweisen, wobei die Schichten 55 aus Metallkeramik und die Schichten 56 aus einem gummiartigen Material bestehen.

In allen Ausführungsvarianten der angetriebenen Elemente 1 sind deren Friktionsschichten 50 aus einem harten abriebfesten Material gefertigt. Vorzugsweise wird hierfür eine dünne Hartchromschicht verwendet. Alternativen hierzu sind beispielsweise eine Schicht aus Al₂O₃, eine Schicht, die kleine Diamantkristalle enthält, abgeschieden aus der Gasphase oder eine Schicht dünner Beläge aus CrN, CrCN, (Cr,W)N, (Cr,Al)N, NbN-CrN, TiN, TiCN, (Ti,Al)N, V₂O₅. Ebenso können als Friktionsschicht 50 Platten aus harter Oxidkeramik auf der Basis von Al₂ 03, ZrO₂, SiC, Si₃N₄oder aus Metallkeramik auf der Basis von WC, Al₂ TiO₅ oder aus ähnlichen abriebfesten Materialien eingesetzt werden.

Das anzutreibende Element 1 kann komplett oder teilweise aus einem Metall mit einer hohen Atomzahl, wie zum Beispiel Titan, Wolfram, Gold, Blei oder einem anderen ähnlichen Material, das Röntgen- oder Neutronenstrahlung aufnimmt, gefertigt sein. Das ermöglicht es, die Motoren vor der Einwirkung einer solchen Strahlung zu schützen.

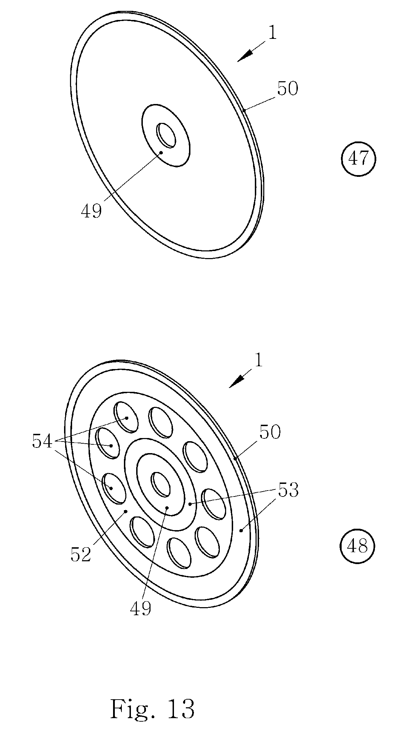

In den Darstellungen 47 und 48 der Fig. 13 sind scheibenförmige anzutreibende Elemente 1 mit einem im Zentrum angeordneten Kugellager 49 und auf der äußeren Umfangsfläche angeordneten Friktionsschicht 50 gezeigt. Während das anzutreibende Element gemäß Darstellung 47 monolithisch ausgeführt ist, weist das anzutreibende Element gemäß Darstellung 48 einen Träger 52 und zwei Seitenteile 53 auf, wobei in dem Träger 52 dämpfende Öffnungen 54 vorgesehen sind.

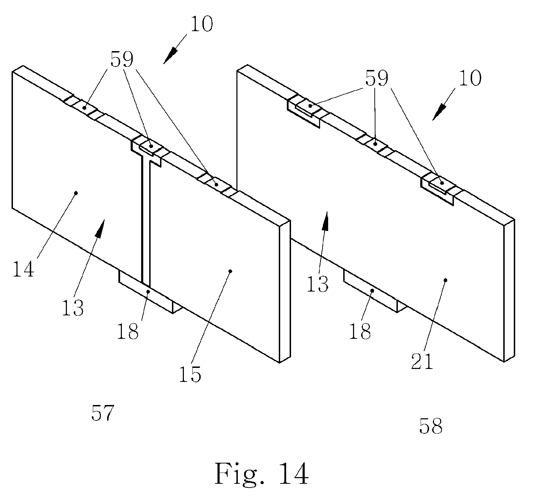

Die Darstellungen 57 und 58 von Fig. 14 zeigen einen Ultraschallaktor 10 eines erfindungsgemäßen Ultraschallmotors in Vorder- und Rückansicht. Auf der Vorderseite befinden sich gemäß Darstellung 57 die Erregerelektroden 14 und 15, die über die entsprechenden Kontaktflächen 59 elektrisch kontaktiert sind. Auf der Rückseite des Aktors gemäß Darstellung 58 befindet sich die allgemeine Elektrode 21, die über die entsprechende Kontaktfläche 59 elektrisch kontaktiert ist.

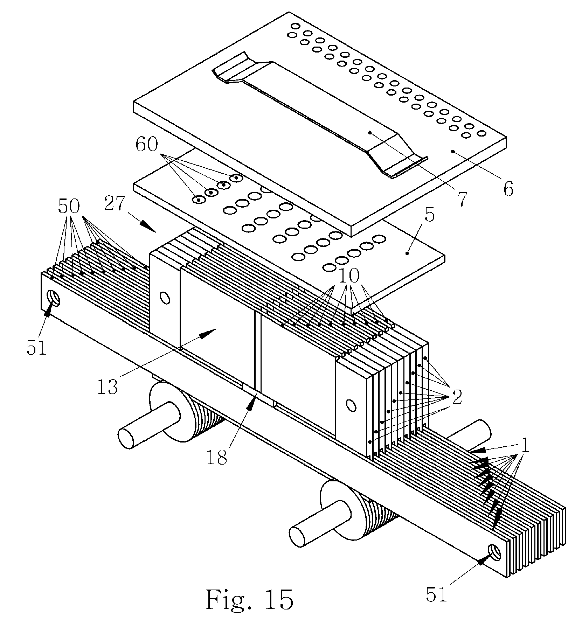

Fig. 15 zeigt eine Ultraschallmotoranordnung, bei welcher die einzelnen Aktoren Kontaktflächen gemäß Fig. 14 aufweisen. Die elastische Zwischenlage 5 weist elektrisch leitfähige Zonen 60, die bei montiertem Zustand des Ultraschallmotors die Kontaktflächen der Aktoren berühren. Der Stirndeckel 6 weist an seiner Unterseite Stromleitungsbahnen auf (in Fig. 15 nicht dargestellt), die in montiertem Zustand die elektrisch leitfähigen Zonen 60 kontaktieren, so dass über den Stirndeckel durch die elastische Zwischenlage die Aktoren 10 elektrisch angeregt werden können.

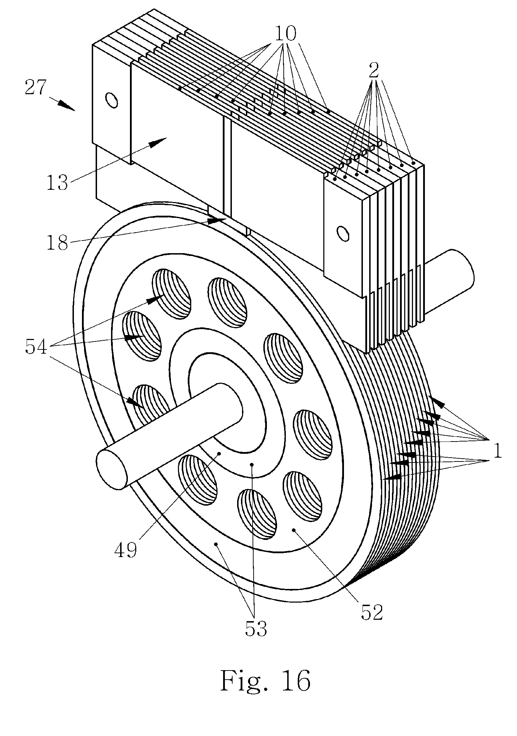

Fig. 16 verdeutlicht den Aufbau eines erfindungsgemäßen Ultraschallmotors mit scheibenförmigen anzutreibenden Elementen 1.

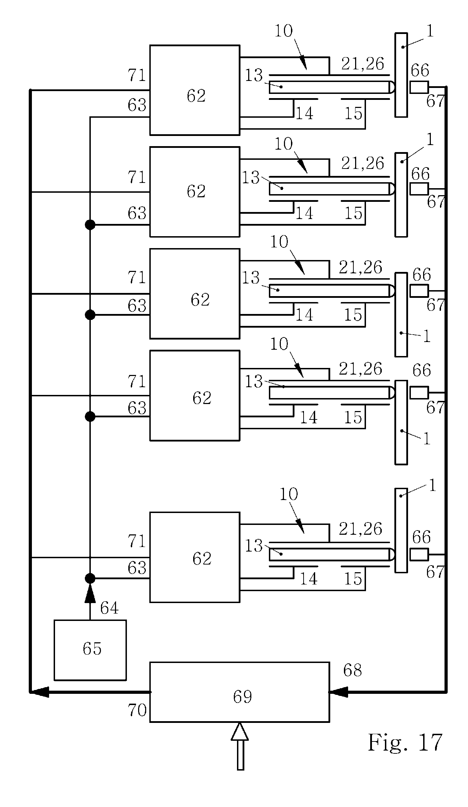

Fig. 17 zeigt die Blockschaltung der Emegervorrichtung eines erfindungsgemäßen Ultraschallmotors. Die Erregemorrichtung weist einen Leistungsverstärker 62 mit Eingängen 63 auf, wobei die Zahl der Leistungsverstärker 62 gleich der Anzahl der im Ultraschallmotor verwendeten Aktoren bzw. Aktorenpaare entspricht. An die Eingänge 63 der Leistungsverstärker 62 wird das Signal vom Ausgang 64 eines Steuergenerators 65 angelegt. Die Frequenz des Ausgangssignals des Steuergenerators 65 wird beim Betrieb des Ultraschallmotors konstant und gleich der Arbeitsfrequenz fₐ eines der Aktoren 10 gehalten.

Jedem anzutreibenden Element 1 ist ein Lage- oder ein Geschwindigkeitsgeber 66 zugeordnet. Die Signale von den Ausgängen jedes der Geber 66 werden an Eingänge 68 eines multifunktionellen Controllers 69 gelegt, dessen Ausgänge 70 mit Steuereingängen 71 der Leistungsverstärker 62 verbunden sind. Der Controller 69 steuert die Position oder die Bewegungsgeschwindigkeit des entsprechenden anzutreibenden Elements 10.

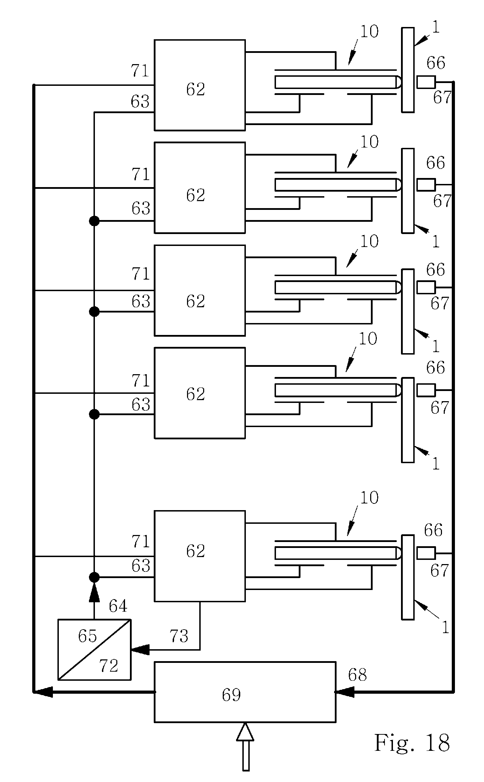

Fig. 18 zeigt die Blockschaltung einer weiteren Ausführungsform der Erregervorrichtung eines erfindungsgemäßen Ultraschallmotors, bei welcher der Steuergenerator 65 eine Vorrichtung 72 zum Einstellen der Frequenz des generierten Signals besitzt. Diese Frequenzeinstellvorrichtung arbeitet mit einem Steuersignal, dass über einen Übertragungskanal 73 an die Frequenzeinstellvorrichtung 72 gelegt wird. Das Steuersignal enthält die Informationen zum Betrag der Arbeitsfrequenz fₐ von einem der Ultraschallaktoren 10. Ein solches Signal kann die elektrische Spannung darstellen, die proportional zur Phase des durch Aktor 10 fließenden Stroms oder zur Phase der Spannung an der freien Elektrode ist.

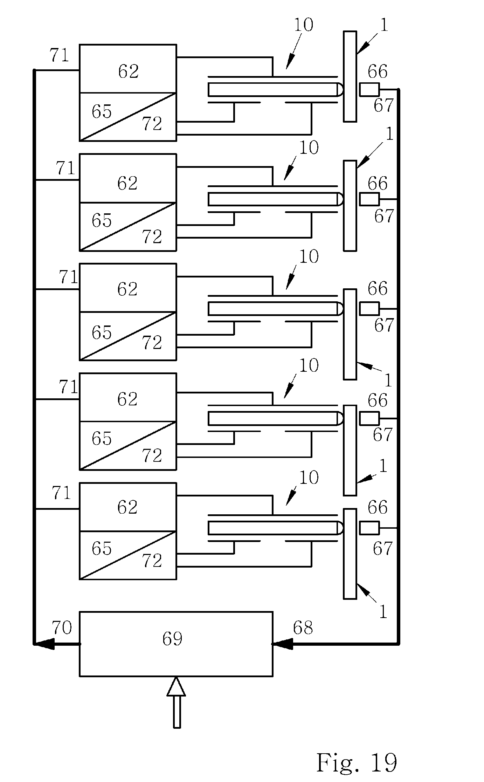

Fig. 19 zeigt die Blockschaltung einer weiteren Ausführungsform der Erregervorrichtung eines erfindungsgemäßen Ultraschallmotors, bei welcher jeder Leistungsverstärker 62 mit dem entsprechenden Steuergenerator 65 mit der Frequenzeinstellvorrichtung 72 verbunden ist. In diesem Fall wird die Frequenz jedes Steuergenerators 65 so eingestellt, dass sie der Arbeitsfrequenz des entsprechenden Ultraschallaktors 10 entspricht.

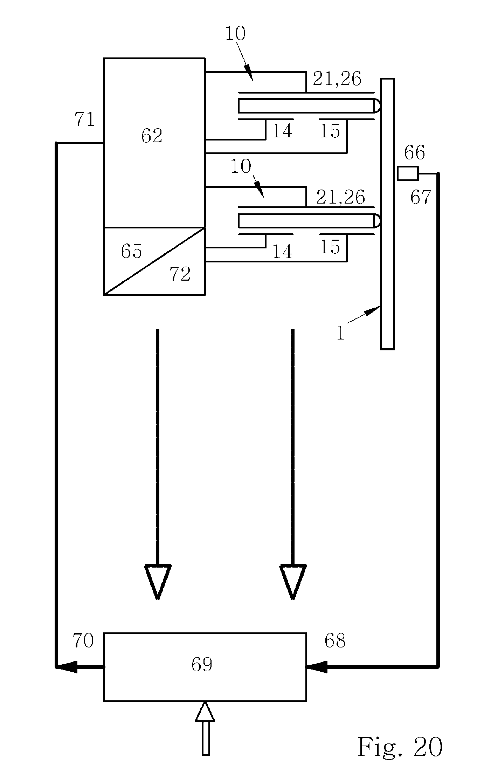

Fig. 20 zeigt die Blockschaltung einer Emegervorrichtung für einen erfindungsgemäßen Ultraschallmotor, welcher mehrere Aktorenpaare 10 aufweist. Hierbei erregt ein Leistungsverstärker 62 ein Aktorenpaar 10, wobei die Frequenz jedes Steuergenerators 65 auf die Arbeitsfrequenz fₐ eines der Ultraschallaktoren 10 des entsprechenden Aktorenpaars 10 abgestimmt ist.

Die Ultraschallaktoren des vorschlagsgemäßen Motors können sowohl durch eine einphasige als auch eine zweiphasige elektrische Spannung angeregt werden. Bei einer einphasigen Erregung des Aktors 10 wird an die Erregerelektrode und die allgemeine Elektrode oder an die Erregerelektrode und die allgemeine Elektrode eine elektrische Spannung der Erregervorrichtung angelegt, deren Frequenz gleich der Arbeitsfrequenz fₐ ist. Das führt dazu, dass in jedem der Aktoren gleichzeitig zwei akustische Longitudinalstehwellen erzeugt werden, die sich in Richtung der Länge L und der Höhe H des Aktors ausbreiten. Im Ergebnis der Ausbreitung dieser Wellen bewegt sich das Friktionselement jedes Aktors auf einer geneigten Bewegungsbahn.

Bei einer zweiphasigen Erregung des Aktors wird an jedes Elektrodenpaar und gleichzeitig zwei phasenverschobene Spannungen der gleichen Frequenz fₐ angelegt. Das führt dazu, dass sich das Friktionselement jedes Aktors auf einer elliptischen Bewegungsbahn bewegt.

Sowohl bei einphasiger, als auch zweiphasiger Ansteuerung kann der Aktor 10 das anzutreibende Element in entgegen gesetzten Richtungen bewegen. Bei einer einphasigen Erregung erfolgt die Änderung der Bewegungsrichtung des angetriebenen Elements durch einen Wechsel bezüglich der elektrisch angesteuerten Erregerelektrode. Bei einer zweiphasigen Erregung erfolgt die Änderung der Bewegungsrichtung durch Änderung des Phasenverschiebungswinkels zwischen den zwei Erregerspannungen um 180°.

Der erfindungsgemäße Ultraschallmotor stellt einen Paketmotor mit Mehuachantrieb dar, in dem sich die anzutreibenden Elemente parallel und unabhängig voneinander bewegen. Dieser Motor ist wesentlich kompakter im Verhältnis zu Ultraschallmotoren nach dem bekannten Stand der Technik. In ihm haben die benachbarten anzutreibenden Elemente einen so kleinen Abstand zueinander, dass er kleiner als die Dicke t der plattenförmigen Aktoren 10 ist und deshalb der Abstand zwischen den beiden äußeren anzutreibenden Elementen minimal ist.

Im Vergleich zum bekannten Stand der Technik entwickelt der erfindungsgemäße Ultraschallmotor eine größere Zugkraft, weist eine kleinere Erregerspannung auf, besitzt einen höheren Wirkungsgrad, hat einen einfacheren konstruktiven Aufbau und geringere Herstellkosten.

## Patentansprüche

1. Ultraschallmotor, umfassend eine Vielzahl plattenförmiger piezoelektrischer Ultraschallaktoren (10), mit jeweils wenigstens einem an diesen angeordneten Friktionselement (18), wobei jeweils einem Ultraschallaktor oder jeweils einem Paar von Ultraschallaktoren ein anzutreibendes Element (1) zugeordnet ist, und der Ultraschallmotor weiterhin ein Gehäuse und eine elektrische Erregervorrichtung aufweist, **dadurch gekennzeichnet, dass** die anzutreibenden Elemente (1) unabhängig voneinander bewegbar sind, und jeder Ultraschallaktor (10) oder jedes Ultraschallaktorpaar in einem Halter (2) angeordnet ist, wobei die Halter (2) mittels Gehäuseseitendeckeln (3) gegeneinander verpresst sind, und die Friktionselemente (18) der Ultraschallaktoren (10) mittels einer elastischen Zwischenlage (5), die in Kontakt mit den Friktionselementen (18) gegenüberliegend angeordneten Randflächen der Ultraschallaktoren (10) steht, gegen eine Friktionsschicht (50) des entsprechenden anzutreibenden Elements (1) gepresst sind.

2. Ultraschallmotor nach Anspruch 1, **dadurch gekennzeichnet, dass** der Halter (2) schalldämpfende Öffnungen oder Nuten (37) aufweist.

3. Ultraschallmotor nach Anspruch 1 oder 2, **dadurch gekennzeichnet, dass** die Ultraschallaktoren (10) an ihnen angeordnete Elektroden (14, 15, 16, 17,21,26) aufweisen, und elektrische Anschlüsse (9) der Elektroden als plattenförmige Metallkontakte oder als Elemente aus leitfähigem Kunststoff oder aus leitfähigem Gummi ausgeführt sind.

4. Ultraschallmotor nach einem der vorangegangenen Ansprüche, **dadurch gekennzeichnet, dass** die elastische Zwischenlage (5) Gummi oder Kunststoff aufweist und vorzugsweise aus diesen Materialien besteht.

5. Ultraschallmotor nach einem der vorangegangenen Ansprüche, **dadurch gekennzeichnet, dass** die elastische Zwischenlage (5) elektrisch leitfähige Zonen (60) besitzt, die in Kontakt mit den Elektroden der Ultraschallaktoren stehen.

6. Ultraschallmotor nach einem der vorangegangen Ansprüche, **dadurch gekennzeichnet, dass** die anzutreibenden Elemente (1) eine platten- oder scheibenförmige Geometrie aufweisen.

7. Ultraschallmotor nach einem der vorangegangenen Ansprüche, **dadurch gekennzeichnet, dass** die anzutreibenden Elemente (1) eine Drei- oder Mehrschichtstruktur aufweisen.

8. Ultraschallmotor nach Anspruch 7, **dadurch gekennzeichnet, dass** wenigstens eine Schicht eines anzutreibenden Elements (1) Oxidkeramik, Metall, Keramik niedriger Güte, poröse Keramik, poröses Metall oder Kunststoff aufweist.

9. Ultraschallmotor nach Anspruch 7 oder 8, **dadurch gekennzeichnet, dass** wenigstens eine Schicht eines anzutreibenden Elements (1) schalldämpfende Öffnungen oder Nuten (54) aufweist.

10. Ultraschallmotor nach einem der vorangegangenen Ansprüche, **dadurch gekennzeichnet, dass** die anzutreibenden Elemente (1) teilweise oder vollständig aus Metall mit einer hohen Atomzahl, wie z. B. Tantal, Wolfram, Gold, Blei oder einem anderen ähnlichen Material, welches Röntgen- oder Neutronenstrahlung aufnimmt, bestehen.

11. Ultraschallmotor nach einem der vorangegangen Ansprüche, **dadurch gekennzeichnet, dass** die Erregervorrichtung Leistungsverstärker (62) enthält, deren Anzahl der Anzahl der Ultraschallaktoren (10) oder der Anzahl der Ultraschallaktorenpaare entspricht, und welche die Ultraschallaktoren erregen, wobei alle Anschlüsse dieser Leistungsverstärker mit einem Steuergenerator (65) verbunden sind, dessen Frequenz des Ausgangsignals konstant und gleich der Arbeitsfrequenz eines der Ultraschallaktoren ist.

12. Ultraschallmotor nach einem der vorangegangen Ansprüche, **dadurch gekennzeichnet, dass** die Erregervorrichtung Leistungsverstärker (62) enthält, deren Anzahl der Anzahl der Ultraschallaktoren (10) oder der Anzahl der Ultraschallaktorenpaare entspricht, und welche die Ultraschallaktoren erregen, wobei alle Anschlüsse dieser Leistungsverstärker mit einem Steuergenerator (65) verbunden sind, der eine Vorrichtung zur Frequenzregulierung des Steuersignals enthält, die diese Frequenz in Abhängigkeit von der Änderung auf die Arbeitsfrequenz eines der Ultraschallaktoren einstellt.

13. Ultraschallmotor nach einem der vorangegangen Ansprüche, **dadurch gekennzeichnet, dass** die Erregervorrichtung Leistungsverstärker (62) enthält, deren Anzahl der Anzahl der Ultraschallaktoren (10) oder der Anzahl der Ultraschallaktorenpaare entspricht, und welche die Ultraschallaktoren erregen, wobei der Eingang jedes Leistungsverstärkers mit dem Ausgang eines Steuergenerators (65) verbunden ist, der eine Vorrichtung (72) zur Frequenzregulierung des Steuersignals enthält, die diese Frequenz in Abhängigkeit von der Änderung der Arbeitsfrequenz des durch den entsprechenden Leistungsverstärker angeregten Ultraschallaktors einstellt.

14. Ultraschallmotor nach einem der vorangegangenen Ansprüche, **dadurch gekennzeichnet, dass** jedes anzutreibende Element mit einem Geber (66) für die Lage und/oder für die Bewegungsgeschwindigkeit ausgestattet ist, der mit einem Controller (69) für die Lage oder Bewegungsgeschwindigkeit dieses anzutreibenden Elements (1) verbunden ist.

## Claims

1. Ultrasonic motor, comprising a plurality of plate shaped piezoelectric ultrasonic actuators (10), with at least one friction element (18) disposed at the ultrasonic actuators (10), wherein an element (1) to be driven is assigned to a respective one of the ultrasonic actuators (10) or to a respective a pair of ultrasonic actuators and wherein the ultrasonic motor further comprises a housing and an electrical excitation device, **characterized in that** the elements (1) to be driven are movable independently from each other, and **in that** each ultrasonic actuator (10) or each pair of ultrasonic actuators (10) is arranged in a holder (2), wherein the holders (2) are pressed against each other by means of housing side lids (3), and the friction elements (18) of the ultrasonic actuators (10) are pressed against a friction layer (50) of the respective element (1) to be driven by means of an elastic intermediate layer (5) which is in contact with edge surfaces of the ultrasonic actuators (10), the edge surfaces lying opposite to the friction elements (18).

2. Ultrasonic motor according to claim 1, **characterized in that** the holder (2) comprises sound absorbing openings or grooves (37).

3. Ultrasonic motor according to claim 1 or 2, **characterized in that** the ultrasonic actuators (10) comprise electrodes (14, 15, 16, 17, 21, 26) being arranged thereon, and **in that** electrical connections (9) of the electrodes are realized as plate shaped metal contacts or as elements of conductive plastic or of conductive rubber.

4. Ultrasonic motor according to one of the preceding claims, **characterized in that** the elastic intermediate layer (5) comprises rubber or plastic and preferably consist of these materials.

5. Ultrasonic motor according to one of the preceding claims, **characterized in that** the elastic intermediate layer (5) comprises electrically conductive zones (60) which are in contact with the electrodes of the ultrasonic actuators.

6. Ultrasonic motor according to one of the preceding claims, **characterized in that** the elements (1) to be driven comprise a plate shaped or disk shaped geometry.

7. Ultrasonic motor according to one of the preceding claims, **characterized in that** the elements (1) to be driven comprise a three-layer structure or a multi-layer structure.

8. Ultrasonic motor according to claim 7, **characterized in that** at least one layer of an element (1) to be driven comprises oxide ceramic, metal, ceramic with low quality factor, porous ceramic, porous metal or plastic.

9. Ultrasonic motor according to claim 7 or 8, **characterized in that** at least one layer of an element (1) to be driven comprises sound absorbing openings or grooves (54).

10. Ultrasonic motor according to one of the preceding claims, **characterized in that** the elements (1) to be driven partially or completely consist of metal having a high atomic number, such as i.e. tantalum, tungsten, gold, lead or of a similar material which absorbs X-ray radiation or neutron radiation.

11. Ultrasonic motor according to one of the preceding claims, **characterized in that** the excitation device comprises power amplifiers (62), the number of power amplifiers (62) corresponding to the number of ultrasonic actuators (10) or to the number of pairs of ultrasonic actuators, the power amplifiers (62) exciting the ultrasonic actuators, wherein all connections of these power amplifiers are connected to a control generator (65), the frequency of the output signal of the control generator (65) being constant and equal to the working frequency of one of the ultrasonic actuators.

12. Ultrasonic motor according to one of the preceding claims, **characterized in that** the excitation device comprises power amplifiers (62), the number of power amplifiers (62) corresponding to the number of ultrasonic actuators (10) or to the number of pairs of ultrasonic actuators, the power amplifiers (62) exciting the ultrasonic actuators, wherein all connections of these power amplifiers are connected to a control generator (65) which comprises a device for frequency regulation of the control signal, which adjusts this frequency to the working frequency of one of the ultrasonic actuators depending on the change.

13. Ultrasonic motor according to one of the preceding claims, **characterized in that** the excitation device comprises power amplifiers (62), the number of power amplifiers (62) corresponding to the number of ultrasonic actuators (10) or to the number of pairs of ultrasonic actuators, the power amplifiers (62) exciting the ultrasonic actuators, wherein the input of each power amplifier is connected to an output of a control generator (65) which comprises a device (72) for frequency regulation of the control signal, which adjusts this frequency dependent on the change of the working frequency of the ultrasonic actor being excited by the respective power amplifier

14. Ultrasonic motor according to one of the preceding claims, **characterized in that** each element (1) to be driven comprises a transmitter (66) for the position and/or for the speed of movement, the transmitter (66) being connected to a controller (69) for the position or the speed of movement of the element (1) to be driven.

## Revendications

1. Moteur à ultrasons, comprenant une pluralité d'actionneurs à ultrasons piézoélectriques en forme de plaquettes (10) avec respectivement au moins un élément de friction (18) disposé sur ceux-ci, un élément à commander (1) étant respectivement associé à un actionneur à ultrasons ou respectivement à une paire d'actionneurs à ultrasons, et le moteur à ultrasons présentant en outre un boîtier et un dispositif d'excitation électrique, **caractérisé en ce que** les éléments à commander (1) peuvent être déplacés indépendamment les uns des autres et **en ce que** chaque actionneur à ultrasons (10) ou chaque paire d'actionneurs à ultrasons est disposé(e) dans un support (2), les supports (2) étant comprimés les uns contre les autres au moyen de couvercles latéraux de boîtier (3), et les éléments de friction (18) des actionneurs à ultrasons (10) étant pressés au moyen d'une couche intermédiaire élastique (5), laquelle est en contact avec les surfaces de bord des actionneurs à ultrasons (10) disposées de manière à se situer en vis-à-vis des éléments de friction (18), contre une couche de friction (50) de l'élément à commander (1) correspondant.

2. Moteur à ultrasons selon la revendication 1, **caractérisé en ce que** le support (2) présente des ouvertures ou rainures (37) d'amortissement du bruit.

3. Moteur à ultrasons selon la revendication 1 ou 2, **caractérisé en ce que** les actionneurs à ultrasons (10) présentent des électrodes (14, 15, 16, 17, 21, 26) disposées sur ceux-ci, et des raccordements électriques (9) des électrodes étant réalisés en tant que contacts métalliques en forme de plaquettes ou en tant qu'éléments en plastique conducteur ou en caoutchouc conducteur.

4. Moteur à ultrasons selon l'une des revendications précédentes, **caractérisé en ce que** la couche intermédiaire élastique (5) présente du caoutchouc ou du plastique et se compose de préférence de ces matériaux.

5. Moteur à ultrasons selon l'une des revendications précédentes, **caractérisé en ce que** la couche intermédiaire élastique (5) possède des zones à capacité de conduction électrique (60), lesquelles sont en contact avec les électrodes des actionneurs à ultrasons.

6. Moteur à ultrasons selon l'une des revendications précédentes, **caractérisé en ce que** les éléments à commander (1) présentent une géométrie en forme de plaquette ou de disque.

7. Moteur à ultrasons selon l'une des revendications précédentes, **caractérisé en ce que** les éléments à commander (1) présentent une structure à trois couches ou multicouches.

8. Moteur à ultrasons selon la revendication 7, **caractérisé en ce qu'**au moins une couche d'un élément à commander (1) présente de la céramique oxydée, du métal, de la céramique du facteur de qualité faible, de la céramique poreuse, du métal poreux ou du plastique.

9. Moteur à ultrasons selon la revendication 7 ou 8, **caractérisé en ce qu'**au moins une couche d'un élément à commander (1) présente des ouvertures ou rainures (54) d'amortissement du bruit.

10. Moteur à ultrasons selon l'une des revendications précédentes, **caractérisé en ce que** les éléments à commander (1) se composent, partiellement ou entièrement, de métal avec un nombre atomique élevé, tel par exemple du tantale, du tungstène, de l'or, du plomb ou un autre matériau semblable, lequel absorbe le rayonnement X ou neutronique.

11. Moteur à ultrasons selon l'une des revendications précédentes, **caractérisé en ce que** le dispositif d'excitation contient des amplificateurs de puissance (62) dont le nombre correspond au nombre d'actionneurs à ultrasons (10) ou au nombre de paires d'actionneurs à ultrasons, et lesquels excitent les actionneurs à ultrasons, tous les raccordements de ces amplificateurs de puissance étant reliés à un générateur de commande (65) dont la fréquence du signal de sortie est constante et identique à la fréquence de travail de l'un des actionneurs à ultrasons.

12. Moteur à ultrasons selon l'une des revendications précédentes, **caractérisé en ce que** le dispositif d'excitation contient des amplificateurs de puissance (62) dont le nombre correspond au nombre d'actionneurs à ultrasons (10) ou au nombre de paires d'actionneurs à ultrasons, et lesquels excitent les actionneurs à ultrasons, tous les raccordements de ces amplificateurs de puissance étant reliés à un générateur de commande (65) qui contient un dispositif pour la régulation de fréquence du signal de commande, lequel régule cette fréquence en fonction de la modification à la fréquence de travail de l'un des actionneurs à ultrasons.

13. Moteur à ultrasons selon l'une des revendications précédentes, **caractérisé en ce que** le dispositif d'excitation contient des amplificateurs de puissance (62) dont le nombre correspond au nombre d'actionneurs à ultrasons (10) ou au nombre de paires d'actionneurs à ultrasons, et lesquels excitent les actionneurs à ultrasons, l'entrée de chaque amplificateur de puissance étant reliée à la sortie d'un générateur de commande (65) qui contient un dispositif (72) pour la régulation de fréquence du signal de commande, lequel régule cette fréquence en fonction de la modification de la fréquence de travail de l'actionneur à ultrasons excité par l'amplificateur de puissance correspondant

14. Moteur à ultrasons selon l'une des revendications précédentes, **caractérisé en ce que** chaque élément à entraîner est muni d'un indicateur (66) pour la position et/ou la vitesse de déplacement, lequel est relié à un contrôleur (69) pour la position ou la vitesse de déplacement de cet élément à commander (1).
